Europäisches Patentamt

European Patent Office

Office européen des brevets

(11) Publication number: **0 071 196**
A1

# (12) EUROPEAN PATENT APPLICATION

(21) Application number: **82106628.9**

(22) Date of filing: **22.07.82**

(51) Int. Cl.³: **F 21 S 11/00**

(30) Priority: **29.07.81 JP 118664/81**
**29.07.81 JP 118665/81**

(43) Date of publication of application:
**09.02.83 Bulletin 83/6**

(84) Designated Contracting States:
**CH DE FR GB IT LI SE**

(71) Applicant: **Mori, Kei**
**3-16-3-501, Kaminoge**
**Setagaya-ku Tokyo(JP)**

(72) Inventor: **Mori, Kei**
**3-16-3-501, Kaminoge**
**Setagaya-ku Tokyo(JP)**

(74) Representative: **Berg, Wilhelm, Dr. et al,**
**Dr. Berg, Dipl.-Ing. Stapf, Dipl.-Ing. Schwabe, Dr. Dr.**
**Sandmair Mauerkircherstrasse 45**
**D-8000 München 80(DE)**

(54) Capsule for solar rays collecting system.

(57) A capsule (4) for sheltering solar radiation collectors (10) in which a pedestal (1) is provided with an exit with a door so that operators can enter it for the purpose of inspection and maintenance and in which an upper and lower parts (2, 3) of a capsule having flanges (2a, 3a) at their peripheries respectively are provided and the plane of the joint between the flanges of the upper and lower parts of the capsule is inclined at an angle to the horizontal, whereby it is able to take away the upper part of the dome from the lower part and dust particles, snow and other matters deposited upon can naturally or readily fall from the capsule or are washed away by rains.

FIG. I

EP 0 071 196 A1

TITLE OF THE INVENTION:

Capsule for Solar Rays Collecting System


BACKGROUND OF THE INVENTION:

The present invention relates to an improvement of capsules for solar rays collecting systems or mechanisms capable of being sheltered from adverse weather conditions and dust particles or the like.

With increasing utilization of solar rays, there have been devised and demonstrated various types of solar radiation collectors. One type of them utilizes the collected solar rays as a light or illumination source. As compared with those which convert the collected solar rays into heat or electricity, its mechanism is far more complex because it must be equipped with a tracking system for always directing and maintaining the solar rays collecting surfaces in line with the sun.

The solar rays collecting systems are generally installed in the open air, so that if dust particles or the like are accumulated on them, their solar rays collection efficiency will drop. As a consequence, they are generally enclosed in capsules made of transparent materials. However, precipitation particles fall or impinge on the sheltering capsules, so that they must be so designed and constructed that the precipitation particles naturally blow around them or even when they are deposited upon the capsules they will naturally fall from the latter.

Furthermore, the solar rays collecting systems are heavy in weight and large in size, so that it is almost impossible to move them for inspection and maintenance. It follows, therefore, that the solar domes must be so designed and constructed that it is able to take away the dome from the capsule and operators can enter them for the purpose of inspection, maintenance and adjustment of the solar rays collecting systems enclosed therein.

OBJECT OF THE INVENTION:

The primary object of the present invention is, therefore, to provide a capsule for solar rays collecting system which is so designed and constructed that the solar rays collecting system is covered by the capsule and sheltered from dust particles or the like deposited on it.

Next object of the present invention is to provide a capsule so designed that a solar rays collecting system enclosed therein is easily accessible for inspection, maintenance and adjustment.

Further object of the present invention is to provide a capsule comprising an upper hemisphere part and a lower hemisphere part having flanges respectively to combine the upper and the lower parts with each other so as to contain the solar-rays collecting system therein easily.

Further object of the present invention is to provide a capsule for sheltering solar rays collecting systems which is so designed and constructed that dust particles or the like deposited on it are naturally caused to fall off from it and that the solar rays collecting system enclosed therein is easily accessible for inspection, maintenance and adjustment.

SUMMARY OF THE INVENTION:

To the above and other ends, the present invention provides a capsule for sheltering solar rays collecting systems in which flanges at the upper and lower parts of the capsule are provided respectively and the plane of the joint between the flanges is inclined at an angle relative to the horizontal. Furthermore, the pedestal which supports the lower part which in turn supports the upper part is provided with an exit with a door so that the operators can enter the sheltering capsule for the purpose of inspection, maintenance and adjustment.

BRIEF DESCRIPTION OF THE DRAWINGS:

Fig. 1 is a perspective view of a first embodiment;

Fig. 2 is a perspective view of a second embodiment of the present invention; and

Fig. 3 is a vertical sectional view of a third embodiment of the present invention, the solar rays collecting system enclosed therein being shown as viewed from the rear.

Same reference numerals are used to designate similar parts throughout the figures.

## DESCRIPTION OF THE PREFERRED EMBODIMENTS:

### FIRST EMBODIMENT:

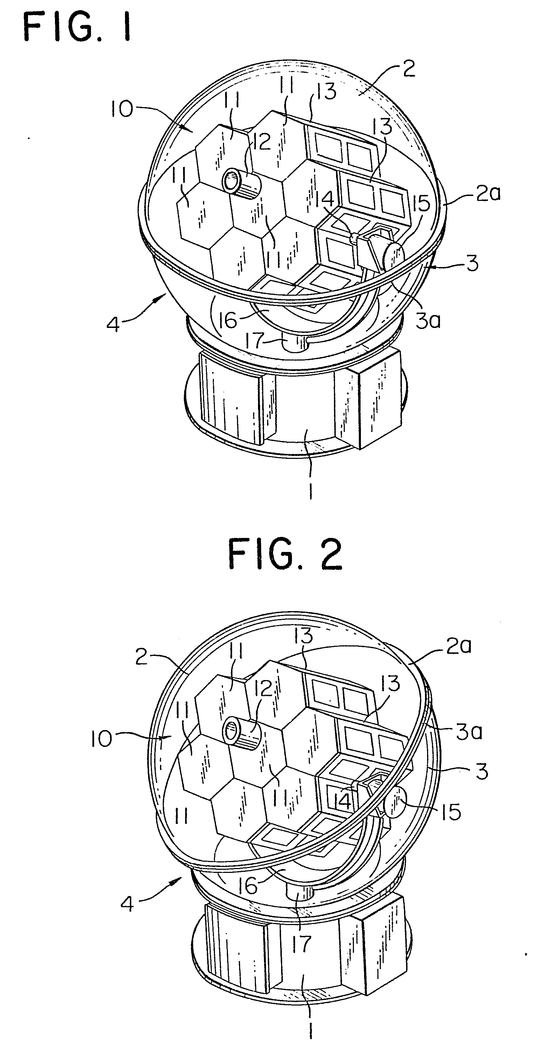

In Fig. 1 is shown in perspective view of a solar rays collecting system of an embodiment of the present invention. Reference numeral 1 denotes a pedestal of a short cylindrical configuration; 2, a transparent solar rays inlet or an upper part of a capsule 4 of a substantially semispherical configuration; and 3, a transparent lower part, in an inverted spherical segment shape, of the capsule which securely interconnects between the upper part 2 and the pedestal 1. The pedestal 1, the upper part 2 and the lower part 3 make up the capsule 4 which houses or shelters a solar radiation collecting system or mechanism generally indicated by the reference numeral 10. The solar radiation collecting system 10 comprises a plurality (for instance, 7 or 9) of lenses 11, a tracking sensor 12 which is adapted to detect the position of the sun, a supporting frame 13 which is adapted to securely support the lenses 11 and the tracking sensor 12 as a unitary construction, a first shaft 14 about which is rotated the supporting frame 13, a first motor 15 which drives the first shaft 14, a supporting arm 16 which supports the lenses 11, the tracking sensor 12, the supporting frame 13, the first shaft 14 and the first motor 15, a second shaft 17 which is disposed perpendicular to the axis of the first shaft 14 and a second motor (not shown) which drives the second shaft 17. In response to the output signals from the tracking sensor 12 which detects the position of the sun, the first and second motors are so driven as to control the lenses 11 in such a manner that they are normally directed toward the sun. The solar rays collected through the lenses 11 are focused at the focal point thereof at which the inlet end of an optical fiber cable or the like is located. The collected solar rays are then transmitted through the cable to a remote place where the solar rays are utilized as illumination energy.

The solar rays collecting system of the type described above is normally enclosed in the capsule 4 which is a sheltering structure in order to protect the solar rays collection system from severe weather and precipitation particles. The circular joint flanges 2a and 3a of the upper and lower parts 2 and 3 of the protecting capsule 4 are joined together in a horizontal plane, so that it is able to take away the upper dome from the lower capsule.

However, in the embodiment of Fig. 1, dust particles and snow flakes impinge and readily accumulate upon the horizontal flange surface. As a result, the solar radiation collection efficiency is adversely affected.

Furthermore, it frequently occurs that the surfaces of the lenses 11, which are enclosed within the protecting capsule 4, are thermally distorted so that the focal points of the lenses 11 are shifted from the correct points. As a consequence, the inlet ends of the optical fiber cables or the like are displaced from the focal points at which are focused the collected solar rays so that the collected rays cannot be efficiently admitted into the optical fiber cables; that is, the coupling efficiency is degraded. In order to solve this problem, the capsule 4 must be removed and the inlet end of the optical fiber cable must be so adjusted that it correctly coincides with the focal point of the lens 11. However, the removal of the sheltering capsule 4 is time-consuming and cumbersome and furthermore there arises the problem that while the adjustments of the positions of the inlet ends of the optical fiber cables are being made, dust particles or the like frequently impinge and accumulate on the tracking sensor 12.

SECOND EMBODIMENT:

In Fig. 2 is shown a second embodiment of the present invention which is different from the sheltering capsule 4 of the first embodiment in that the joint plane of the circular joint flanges 2a and 3a of the upper and lower parts 2 and 3 is inclined at an angle relative to the horizontal. As a consequence, even if dust particles or the like have been accumulated on the flange surfaces, they are readily washed away along the flange surfaces in case of rain. In like manner, the snow flakes which impinge upon the flange surfaces easily slide down along them. Thus, the degradation of the solar radiation collection efficiency due to the accumulation of dust particles and snow or the like over the flange surfaces can be substantially eliminated, so that the efficient solar radiation collection can be always ensured.

THIRD EMBODIMENT:

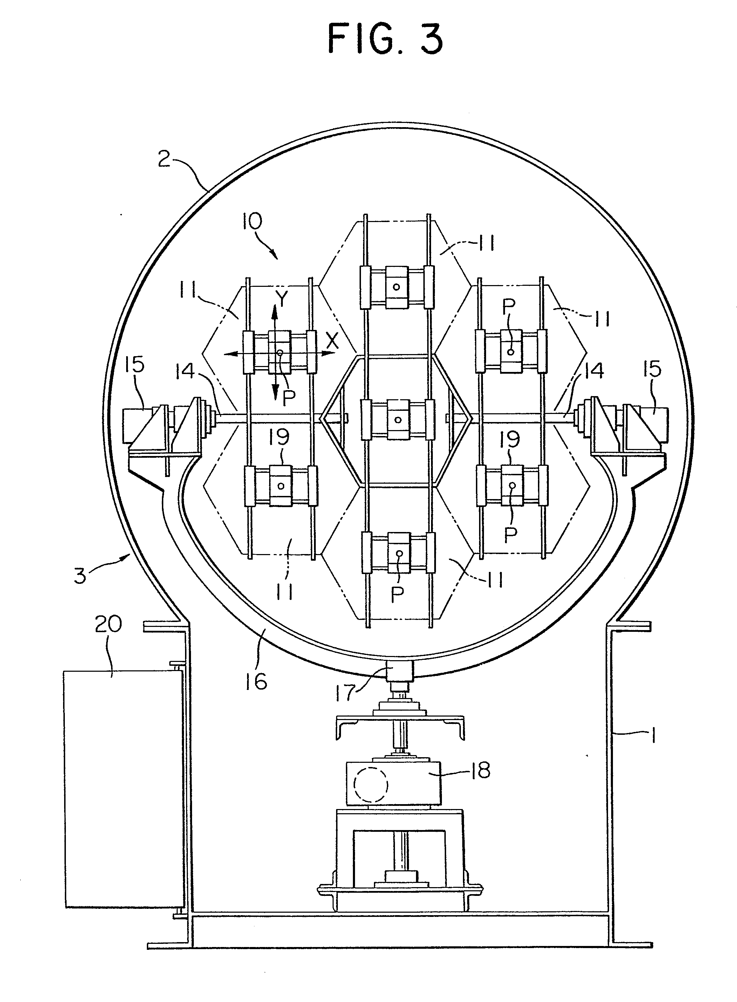

In Fig. 3 is shown a third embodiment of the present invention in which the pedestal 1 is provided with an entrance with a door 20, so that an operator can freely enter the sheltering capsule 4 for inspection and maintenance. In Fig. 3 is shown the second motor which is designated by the reference numeral 18 and which drives the second shaft 17. Shown is also an adjusting means 19 which is used for relocating the inlet end of the optical fiber cable at the focal point of the corresponding lens 11. The inlet end of the cable which receives the collected solar radiation is attached to the adjusting means 19 at P. More specifically, when the focal points of the collecting lenses 11 are considered to have been shifted from their original positions, so that the solar radiation collection efficiency has dropped as described hereinbefore, the operator can enter the sheltering capsule 4 through the entrance and then shifts each of the adjusting means 9 in the horizontal and vertical directions as indicated by X and Y respectively so that the inlet end of each optical fiber cable be correctly located at the focal point of the corresponding lens 11.

In summary, according to the third embodiment of the present invention described above, the operator can enter the sheltering capsule which encloses the solar radiation collecting system so that the positions of the inlet ends of the optical fiber cables can be correctly adjusted in the manner described above and furthermore if the optical fiber cables are entangled, they can be easily released.   Therefore, as compared with the prior art sheltering capsule, the present invention can remarkably improve maintainability of the solar rays collection system.

WHAT IS CLAIMED IS:

. 1. A sheltering capsule for solar rays collecting systems of the type comprising

a pedestal of a short cylindrical configuration, and

a transparent dome-shaped structure which encloses a solar rays collecting system, characterized in that said transparent dome-shaped structure comprises

an upper part of a substantially semispherical configuration having a flange at the lower periphery thereof, and

a lower part which has a flange at the upper periphery and is adapted to securely interconnect between said pedestal foundation and said upper part.

2. A sheltering capsule for solar rays collecting systems as set forth in Claim 1 further characterized in that the plane in which said upper and lower parts of the capsule are securely joined together is inclined at a predetermined angle with respect to the horizontal plane.

3. A sheltering capsule for solar rays collecting systems as set forth in Claim 1 further characterized in that said pedestal is provided with an entrance with a door.

1|2

0071196

# FIG. 1

# FIG. 2

# FIG. 3

# EUROPEAN SEARCH REPORT

European Patent Office

Application number

EP 82 10 6628

## DOCUMENTS CONSIDERED TO BE RELEVANT

| Category | Citation of document with indication. where appropriate, of relevant passages | Relevant to claim | CLASSIFICATION OF THE APPLICATION (Int. Cl. ³) |
|---|---|---|---|
| | --- | | F 21 S   11/00 |
| X | DE-B-2 448 121   (BIRKLE) *Figure 1* | 1 | |
| | --- | | |
| X | DE-A-2 559 226   (ESSER) *Figure 3* | 1,2 | |
| | --- | | |
| A | DE-B-1 180 695   (EBERSPÄCHER) *Figure 1* | 1 | |
| | --- | | |
| A | US-A-3 949 732   (REINES) *Figure 11* | 3 | |
| | ----- | | |

TECHNICAL FIELDS SEARCHED (Int. Cl. ³)

F 21 S
F 24 J

The present search report has been drawn up for all claims

| Place of search | Date of completion of the search | Examiner |
|---|---|---|
| THE HAGUE | 02-11-1982 | FOUCRAY R.B.F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03 82